# EUROPEAN PATENT APPLICATION

(11) **EP 3 312 355 A1**
(43) Date of publication of application: **25.04.2018**
(21) Application number: 17197519.6
(22) Date of filing: 20.10.2017
(51) Int. Cl.: E04B 1/24, E04B 2/96, E04B 1/38, F16B 5/02

(54) **IMPROVED SLIP CLIP CONNECTION**

(30) Priority: 21.10.2016 US 201662411534 P
(71) Applicant: Daudet, Larry Randall, Pleasanton CA 94588 (US)
(72) Inventor: Daudet, Larry Randall, Pleasanton CA 94588 (US)
(74) Representative: Boult Wade Tennant

(57) **Abstract**

An improved connection between supporting and supported structural members, particularly between curtain walls and interior support structures, wherein the connector is an angular member having first and second plates joined at an angular junction and the second plate is formed with a plurality of elongated slots and the fastening of the angled connector to the second structural member is strengthened with a reinforcing bracket.

## Description

### BACKGROUND OF THE INVENTION

The present invention belongs to a class of stud mounting clips that are useful in the construction of buildings. The present invention provides an improved connection between two structural members made with a slip clip and a reinforcing bracket.

Many buildings are constructed with steel stud wall systems. For a variety of reasons, it is often advantageous to construct these walls systems with connectors that permit a degree of relative movement between the portions of the building. Buildings often settle unevenly on their foundations once they are constructed and this can cause exterior walls to shift with respect to the interior structural elements of the building. Exterior walls and frames, particularly of light commercial buildings, are also often made from materials that have different coefficients of expansion than that of the structure's exterior sheathing. With exposure to extremes of temperature, gaps can be produced in the exterior sheathing panels if they expand or contract more than the framing, allowing cold air and moisture to intrude. Exterior walls of buildings are also subject to deflection from wind or seismic forces. A degree of freedom of movement between portions of the building can reduce stress and prevent fracture of connected parts, or opening of gaps between parts. Similarly, certain walls are not designed to support vertical loads and must therefore by isolated from the deflection of the primary load-bearing support structure of the building due to changes in live or dead loads carried by that structure.

There are a variety of patented slip clips that permit relative movement between structural members. US Patents 5,664,392, 6,612,087, 6,688,069 and 8,555,592 all teach metal slip clips with special reinforcing members such as flanges or embossments to strengthen the clip. US Patents 5,720,571 and 5,846,018 teach slip clips that use a rivet as the fastener on which sliding between the members occurs. US Patents 7,104,024 and 7,503,150 teach connecting sliding fasteners in separate slots with a u-shaped washer to strengthen the connection. US Patent 8,511,032 teaches using multiple sliding fasteners in a single slot.

The slip clip connection of the present invention has been designed to achieve strong load values while being inexpensive to manufacture and install. The present invention focuses on strengthening the connection of the angled connector to the second structural member, and in particular that portion of the angled connector interfacing with the second structural member that is near the fastener connecting the angled connector to the second structural member that is closest to the first structural member.

### SUMMARY OF THE INVENTION

In a first aspect, the present invention provides a first building structural connection comprising:
a. a first structural member;
b. a second structural member;
c. a first connector, connecting said first structural member to said second structural member, said first connector having a first plate fastened to said first structural member, and a second plate fastened to said second structural member, said second plate being joined to said first plate at an angular juncture, wherein said second plate has a plurality of fastener openings, said plurality of fastener openings are formed as a plurality of substantially parallel elongated slots in said second plate, said plurality of elongated slots being disposed substantially parallel to the angular juncture between the first and second plates, and one of the elongated slots is disposed closer to the angular juncture than the other elongated slots, and at least two of the plurality of elongated slots in said second plate is a site of a fastening to the second structural member, and at least two of the plurality of elongated slots receives at least one fastener having an elongated shank and a head, wherein the elongated shank of each fastener is received in the second structural member, and each at least one fastener can move along the elongated slot in the second plate when the second structural member moves with respect to the second plate, and wherein the elongated slot disposed closer to the angular juncture than the other elongated slots is one of the at least two of the plurality of elongated slots that is a site of a fastening to the second structural member and receives at least one fastener having an elongated shank and a head; and
d. a reinforcing member, said reinforcing member being connected to said second structural member and having portions that overlie the second plate of the angled connector.

The present invention provides a connection between a first structural member and a second structural member by means of an angled connector having first and second plates joined at an angled juncture. The first plate is connected to the first structural member and the second plate is joined to the second structural member by a plurality of fastenings that allow the second structural member to move relative to the first structural member a selected distance and wherein the fastening of the angled connector to the second structural member closest to the angled juncture is reinforced.

The present invention provides an angled connector used in connection with a reinforcing member or bracket to connect the first structural member to the second structural member. The reinforcing bracket connects to the second structural member and prevents the angled connector from pulling too far away from the second structural member by having portions that extend over the angled connector.

The present invention provides a reinforcing bracket that overlies the angled connector while still providing the designed-for freedom of movement between the first and second structural members. According to the present invention, the reinforcing bracket can be one member joined to the second structural member both above and below the angled connector, or the reinforcing member can be joined to the second structural member at one location. In another embodiment, the reinforcing bracket can be a plurality of members that overlay portions of the angled connector.

In selected embodiments, the reinforcing bracket anchors to the web of the second structural member, and in other selected embodiments the bracket is connected to the web and to a different face of the second structural member.

The angled connector and the reinforcing bracket of the present invention are preferably made from light-gauge steel.

### BRIEF DESCRIPTION OF THE DRAWINGS

Preferred embodiments of the present invention will now be described by way of example only with reference to the accompanying drawings, in which:
Fig. 1 is a perspective view of a wall stud to floor member connection formed according to the present invention
Fig. 2 is a close-up perspective view of the connection of Fig. 1.

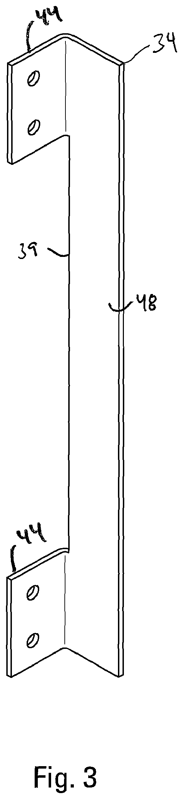

Fig. 3 is a perspective view of one embodiment of the connector of the present invention.

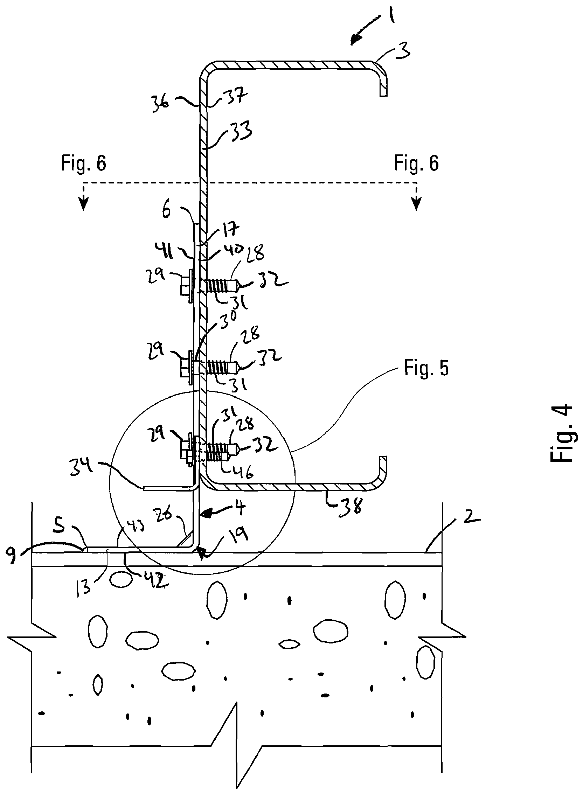

Fig. 4 is a top view of the connection shown in Fig. 1.

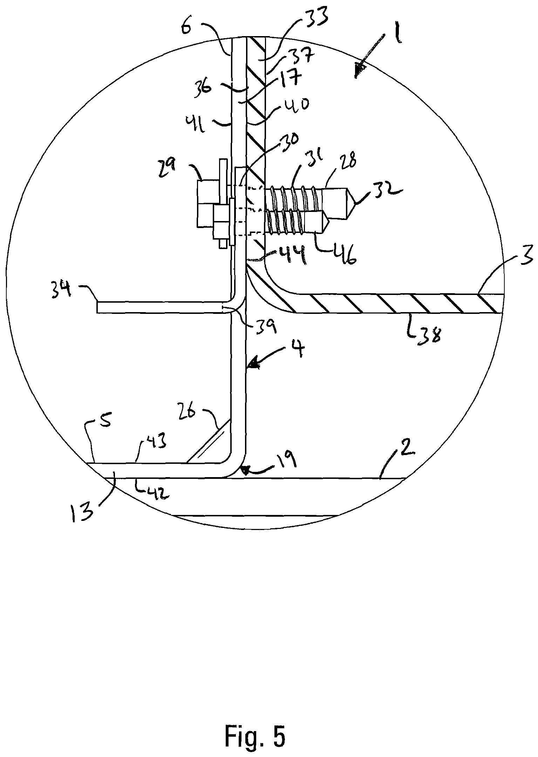

Fig. 5 is a close-up top view of the connection of Fig. 1.
Fig. 6 is a cross-sectional side view of the connection shown in Fig. 1.

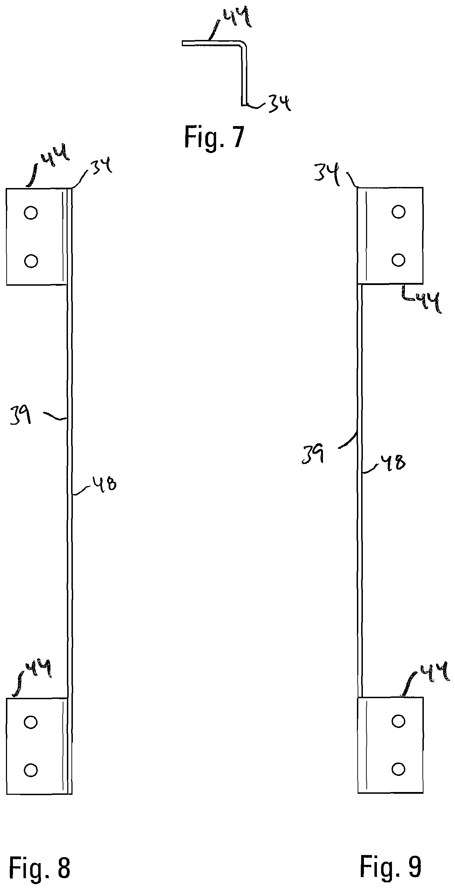

Fig. 7 is a top view of the connector of Fig. 3.
Fig. 8 is a front view of the connector of Fig. 3.
Fig. 9 is a back view of the connector of Fig. 3.

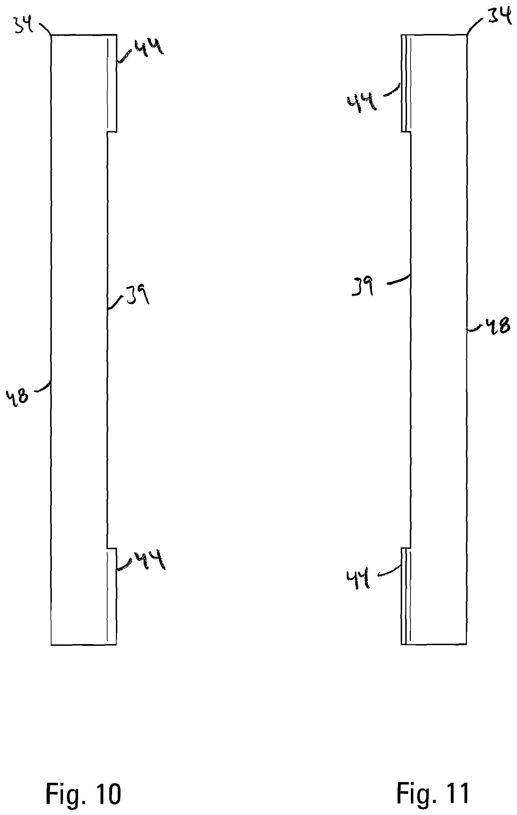

Fig. 10 is a right side view of the connector of Fig. 3.
Fig. 11 is left side view of the connector of Fig. 3.
Fig. 12 is a perspective view of a wall stud to floor member connection formed according to the present invention
Fig. 13 is a close-up perspective view of the connection of Fig. 12.
Fig. 14 is a perspective view of one embodiment of the connector of the present invention.
Fig. 15 is a top view of the connection shown in Fig. 12.

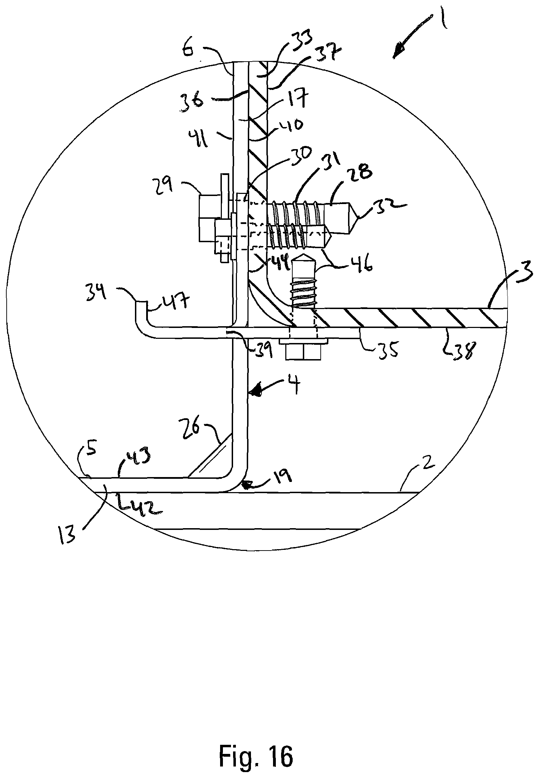

Fig. 16 is a close-up top view of the connection of Fig. 12.
Fig. 17 is a cross-sectional side view of the connection shown in Fig. 12.
Fig. 18 is a top view of the connector of Fig. 14.
Fig. 19 is a front view of the connector of Fig. 14.
Fig. 20 is a back view of the connector of Fig. 14.

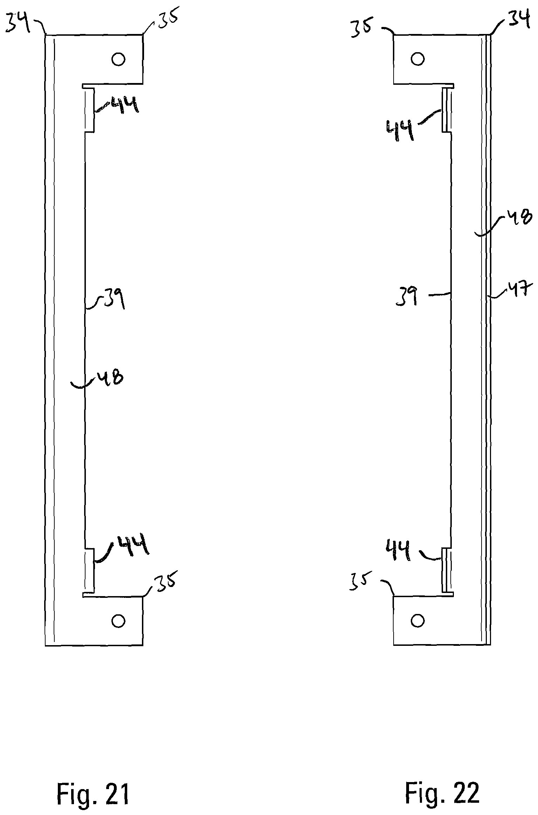

Fig. 21 is a right side view of the connector of Fig. 14.
Fig. 22 is left side view of the connector of Fig. 14.
Fig. 23 is a perspective view of a wall stud to floor member connection formed according to the present invention

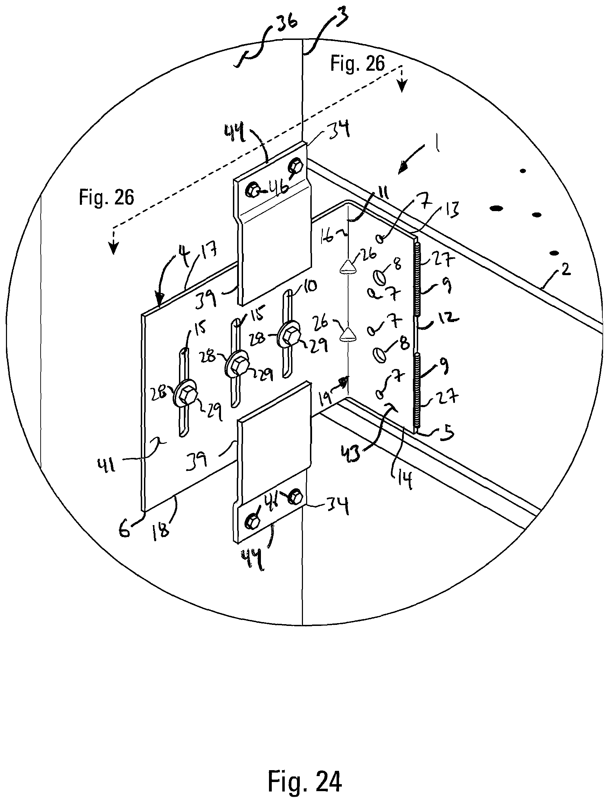

Fig. 24 is a close-up perspective view of the connection of Fig. 23.

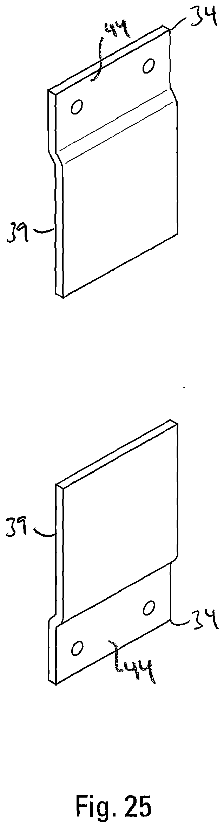

Fig. 25 is a perspective view of connectors of the present invention.

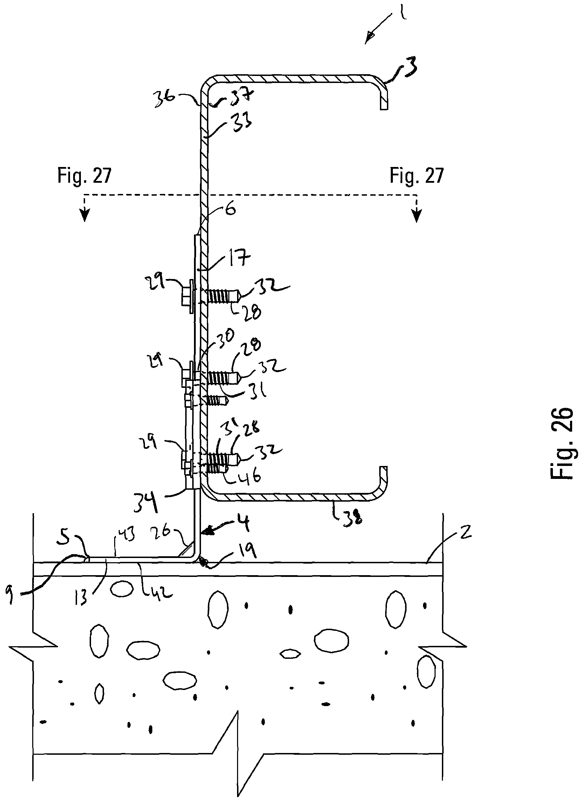

Fig. 26 is a top view of the connection shown in Fig. 23.
Fig. 27 is a cross-sectional side view of the connection shown in Fig. 23.

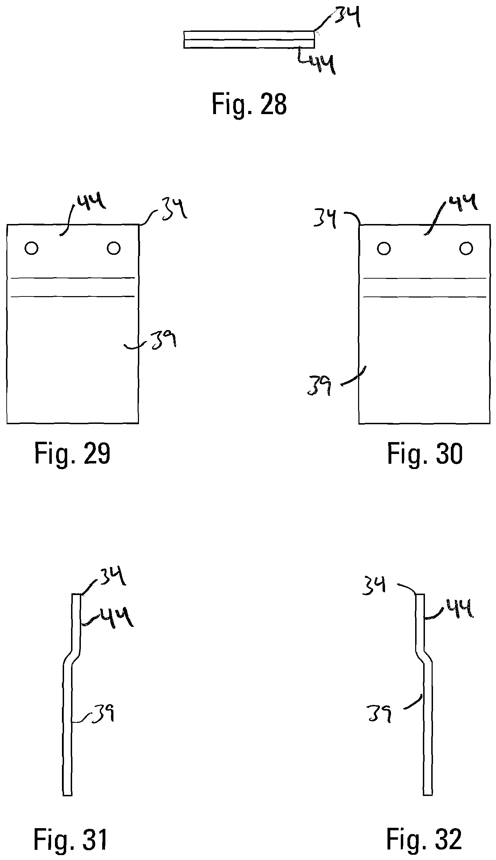

Fig. 28 is a top view of the connector of Fig. 25.
Fig. 29 is a front view of the connector of Fig. 25.
Fig. 30 is a back view of the connector of Fig. 25.
Fig. 31 is a right side view of the connector of Fig. 25.
Fig. 32 is left side view of the connector of Fig. 25.
Fig. 33 is a perspective view of a wall stud to floor member connection formed according to the present invention

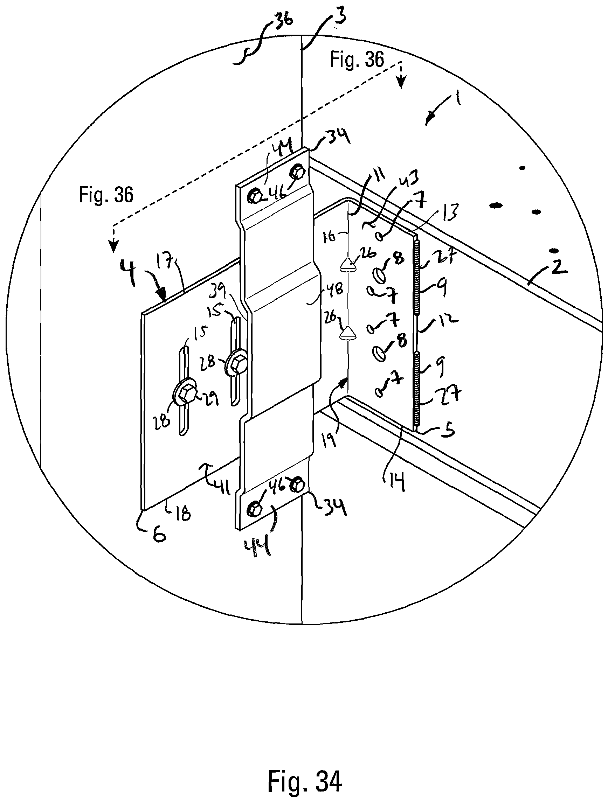

Fig. 34 is a close-up perspective view of the connection of Fig. 33.

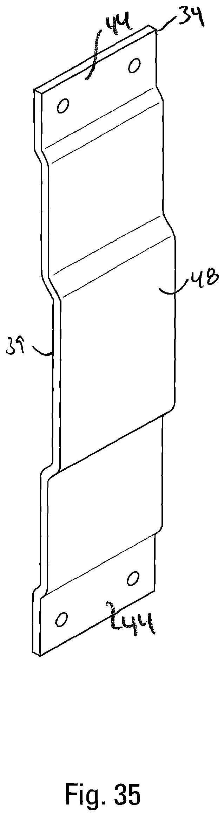

Fig. 35 is a perspective view of one embodiment of the connector of the present invention.

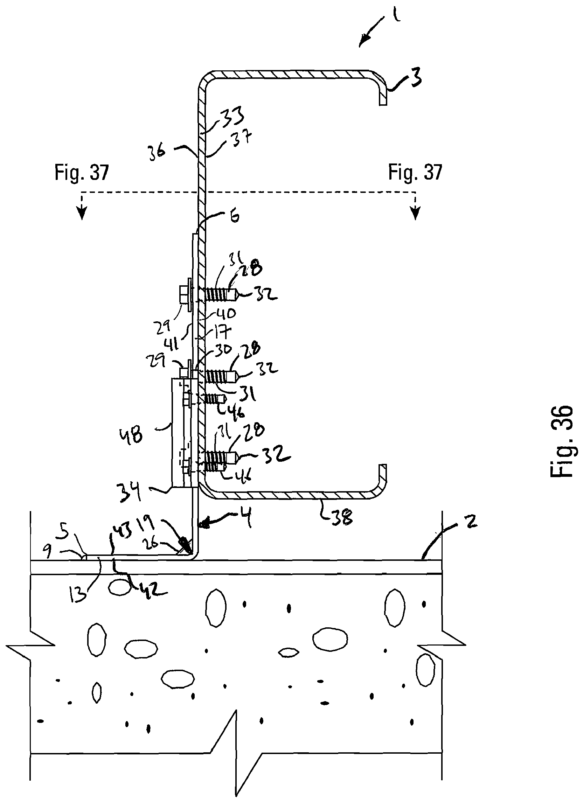

Fig. 36 is a top view of the connection shown in Fig. 33.

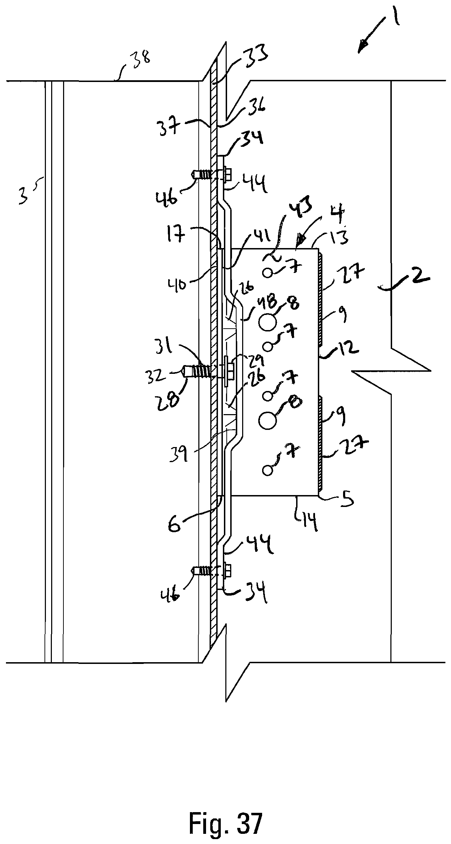

Fig. 37 is a cross-sectional side view of the connection shown in Fig. 33.

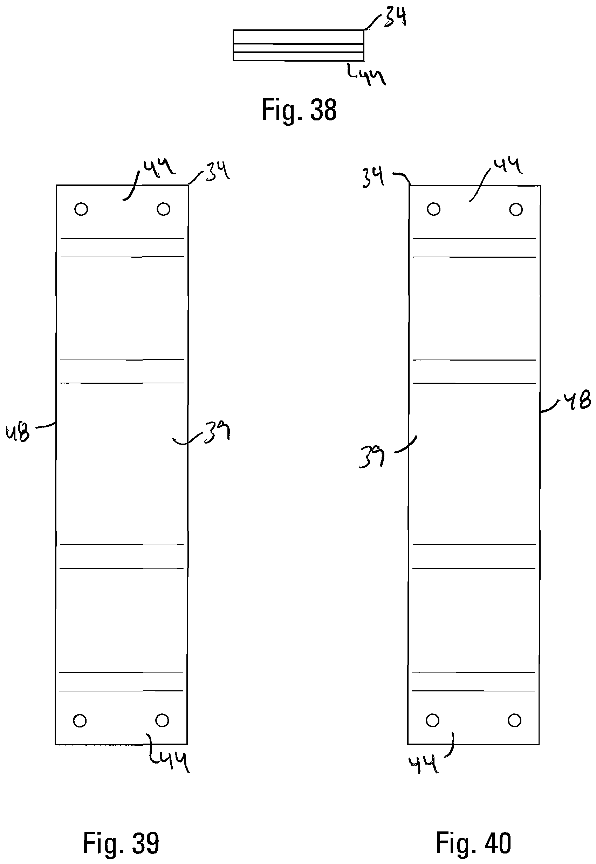

Fig. 38 is a top view of the connector of Fig. 35.
Fig. 39 is a front view of the connector of Fig. 35.
Fig. 40 is a back view of the connector of Fig. 35.

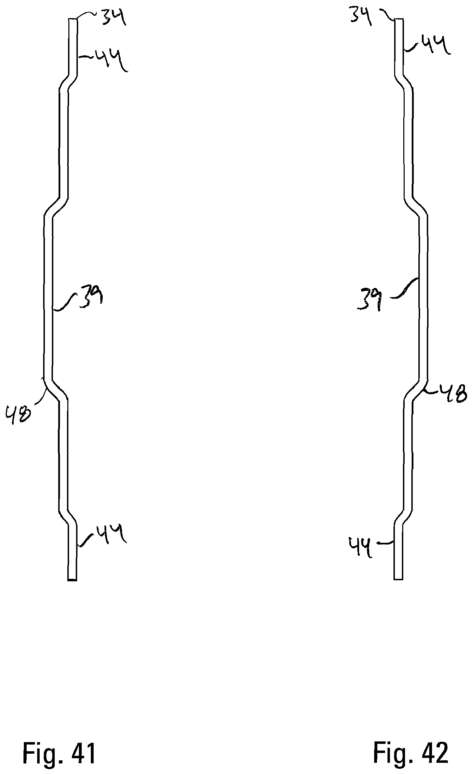

Fig. 41 is a right side view of the connector of Fig. 35.
Fig. 42 is left side view of the connector of Fig. 35.

### DETAILED DESCRIPTION OF THE INVENTION

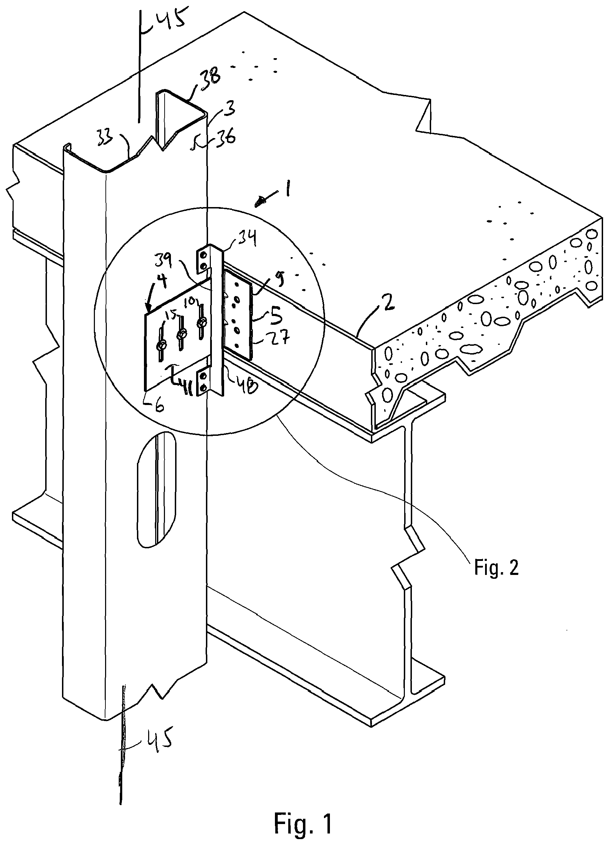

The present invention is a building structural connection **1** between a first structural member **2** and a second structural member **3.** Preferably, the first structural member 2 is a supporting member or anchoring member 2 and the second structural member 3 is a supported structural member 3. As shown in Fig. 1, the first structural member 2 is a floor member that is horizontally disposed 2 with an attached ledger and the second structural member 3 is a vertically-oriented channel-shaped wall post or stud 3 that is part of a wall.

The connection 1 between the first structural member 2 and the second structural member 3 is made with a first angled connector **4.** The first angled connector 4 is preferably L-shaped, with a first plate **5** fastened to the first building structural member 2 and a second plate **6** fastened to the second building structural member 3. Preferably, the first plate 5 and the second plate 6 are generally planar and joined at right angles to each other. The connector 4 allows for relative vertical movement between the first and second building structural members 2 and 3. The connector 4 is preferably made from cold formed sheet steel formed on automated manufacturing machinery as much as possible.

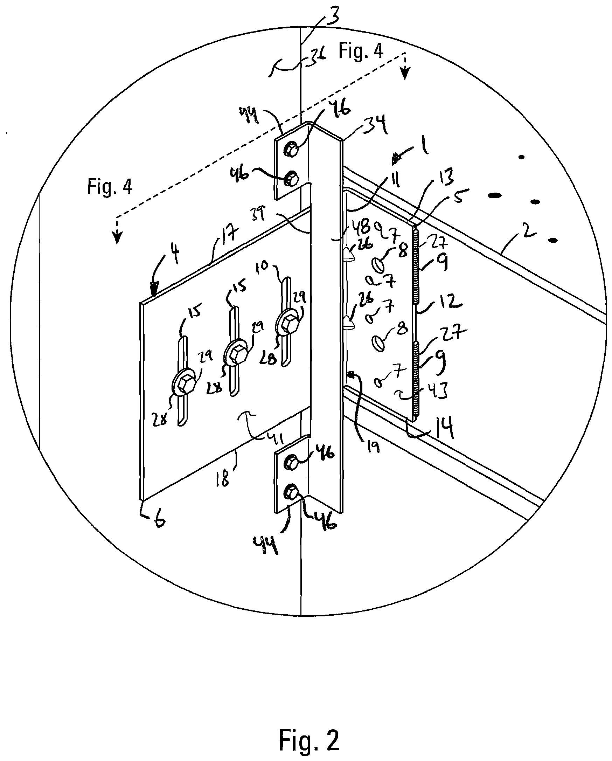

As shown in Fig. 2, the first plate 5 has first and second fastener openings **7** and **8.** Fastener openings 8 are larger than fastener openings 7 to accommodate larger fasteners. The angled connector 4 shown in Figure 2 is attached to the second structural member by welds **9.**

The first plate 5 has a first inner edge **11,** a first outer edge **12,** a first side edge **13** and a second side edge **14.**

As shown in Fig. 2, the second plate 6 has a plurality of fastener openings **10** and **15** formed as elongated slots. The second plate is also provided with a first inner edge **16,** a first side edge **17** and a second side edge **18.** The first inner edge 11 of the first plate 5 is joined to the first inner edge 16 of the second plate 6 to form an inner angular juncture **19.** Preferably the inner angular juncture 19 is 90 degrees. One of the slotted openings **10** lies closer to the 19 juncture than the other slotted openings 15. The slotted openings are preferably disposed parallel to the angular juncture 19 between the first plate 5 and the second plate 6. Each elongated slot 10 and 15 in the second plate 6 is a site of a fastening to the second structural member 3.

As shown in Fig. 2, the connector 4 includes a plurality of gusset darts **26** having a substantially triangular shape when viewed from a lateral side thereof, the substantially triangular shaped gusset darts 26 are disposed in the inner angular juncture 19 between the plates 5 and 6. The gusset darts 26 preferably have a substantially u-shaped cross-section. The gusset darts 26 reinforce the inner angular juncture 19.

Preferably, a first plurality of fasteners **27** attaches the first plate 5 to the first building structural member 2. As shown in Fig. 2 the fasteners 27 can be welds 9, but anchors and screws received in the fastener openings 7 and 8 are also preferred. A plurality of fasteners **28** preferably attaches the second plate 6 to the second building structural member 3. Preferably, the fasteners 28 that attach the second plate to the second structural member are screws 28 of similar dimensions. The preferred fasteners 27 for attaching the connector 4 to first structural member 2 made from steel are hexhead fasteners, automated power-actuated gun-driven fasteners or, alternatively, welds 9. The preferred fasteners 27 for attaching the angled connector 4 to first structural members 2 made from concrete are concrete screws. The preferred fasteners 28 for attaching the connector 4 through slots 10 and 15 are shouldered, or stepped-shank, self-drilling screws 28.

As shown in Fig. 1, the second plurality of fastener openings 10 and 15 is preferably formed as a plurality of elongated slots 10 and 15 in the second plate 6 as movement between the structural member 3 and the connector 4 is desired. When the fastener 28 is drilled into or connected to the stud or second structural member 3, the fastener is anchored in the stud 3. When the stud 3 moves relative to the first structural member 2 the fastener 28 moves in the elongated slot 15. Preferably, the first building structural member 2 is fastened to the angled connector 4 so that the first building structural member 2 cannot move relative to the first plate 5 of the first connector 4. The second building structural member 3 is preferably fastened to the first connector 4 so that the second building structural member 3 can move relative to the second plate 6 of the first connector 4. The plurality of elongated slot openings 10 and 15 that extend across the second plate 6 extend generally parallel to the inner angular juncture 19 between the first plate 5 and the second plate 6.

Preferably, the fasteners of the second plurality of fasteners 28 are shouldered, or stepped-shank screws 28. Shouldered screws 28 have a head **29,** an unthreaded shank portion **30** immediately below the head 29, a threaded shank portion **31** below the unthreaded shank portion 30, and a tip **32.** The tip 32 is preferably a self-drilling tip. The unthreaded shank portion 30 allows the second building structural member 3 and the fasteners 28 attached to it to move relative to the second plate 6 without interference between the second plurality of fastener 28 and the second plate 6 of the first connector 4, because the unthreaded shank portion 30 stops driving of the fastener 28 before the head 29 of the fastener reaches the second plate 6. The tip 32 is designed to drill itself into the web **33** of the stud 3. The web 33 of the stud is preferably a substantially planar member.

Each elongated slot 10 and 15 in said second plate 6 is a site of a fastening to the second structural member 3, and each elongated slot 10 and 15 preferably receives at least one fastener 28 having an elongated shank and a head 29, wherein the elongated shank of each fastener 28 is received in the second structural member 3, and each at least one fastener 28 can move along the elongated slot 15 in the second plate 6 when the second structural member 3 moves with respect to the second plate 6. As shown in Fig. 1, the reinforcing member or bracket **34** reinforces the connection between the angled connector 4 and the second structural member 3 near the fastening in the elongated slot 10 closest to the angular juncture 19.

As shown in Fig 1, the reinforcing member 34 is a single bracket attached to the second structural member 3 and overlies the angle connector 4 close to the elongated slot 10 closest to the angular juncture 19. As shown in Figs. 1 and 2, the reinforcing member 34 spans a distance greater than that of the angled connector 4 along the length of the second structural member 3 and is anchored to the second structural member 3 away from the first and side edges 13 and 14 of the second plate 6 of the angled connector 4. The reinforcing member is connected to the second structural manner 3 in a manner that allows for the same amount of movement between the second structural member 3 and the angled connector 4 as would occur if the reinforcing bracket 34 was not used.

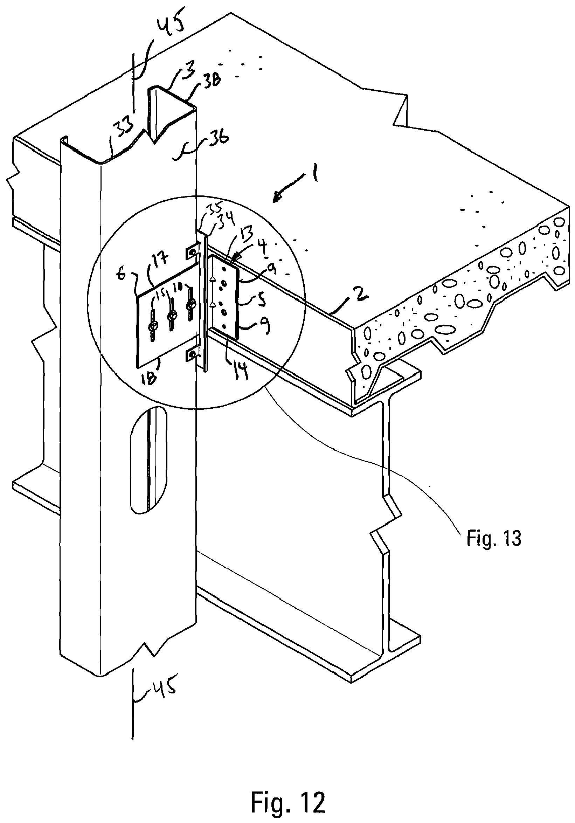

As shown in Fig. 12, the reinforcing member 34 can be formed with an extending flange **35** so that the reinforcing member 34 can interface and be attached to a side flange **38** of the second structural member 3. The second structural member 3 preferably has an attachment face **36** and an opposite face **37,** and the second plate 6 has an attachment side **40** and an open side **41** facing in the opposite direction. The attachment side 40 of the second plate 6 faces the second building structural member 3. The side flange 38 is set a different angle to the attachment face 36 of the second structural member 3. The angular connector 4 is preferably disposed on the attachment face 36 as shown in Fig. 12. Preferably, as shown in Fig. 12 the overlying portions **39** of the reinforcing member 34 can press against the open side 41 of the second plate 6 if the angled connector 4 tries to pull away from the second stud 3. Preferably, the overlying portions 39 of the reinforcing member 34 are located in close proximity to the open side 41 of the second plate 4 without being in contact with the second plate 4 so as to not interfere with any movement of the second structural member 3 along its longitudinal axis **45.** The reinforcing member 34 resists the angled connector 4 being moved from the second structural member 3 orthogonally to the longitudinal axis 45 of the second structural member 3, as when the second plate 6 may try to separate from the second structural member 3 under certain load conditions.

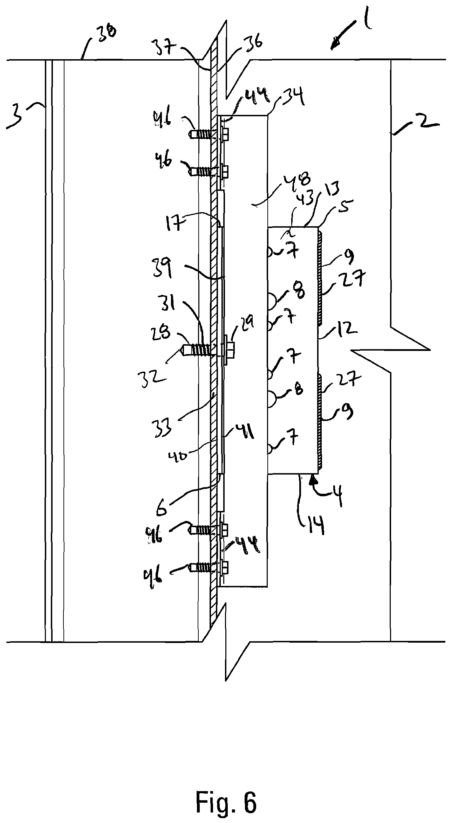

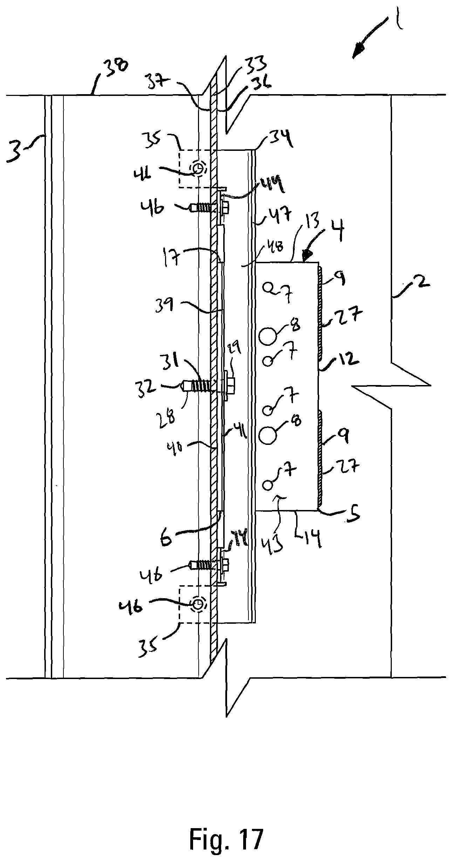

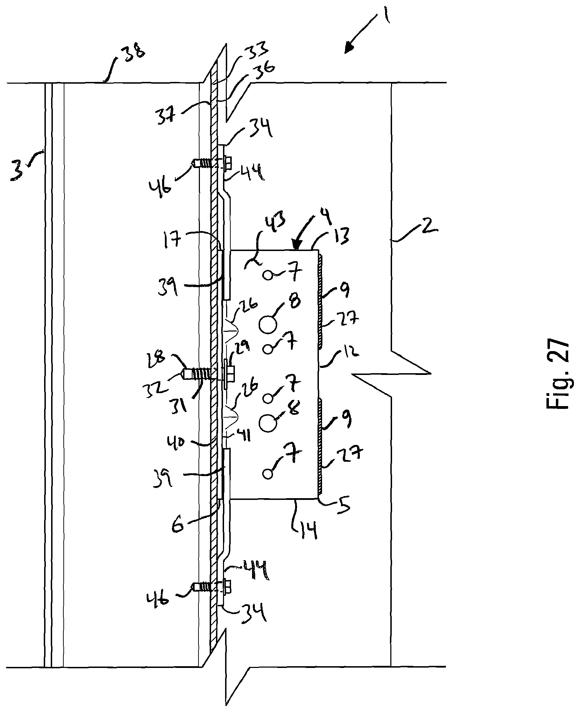

As best shown in Figs. 6, 17 and 27, any portions of the reinforcing member 34 that may interfere with the movement of the second structural member 3 along the longitudinal axis of the second structural member 3 with respect to the angled connector 4 are spaced a selected distance away from the side edges 13, 14, 16 and 17 of the first and second side plates 5 and 6 of angled connector 4. In this manner the second structural member 3 can move with respect to the second plate 6 along the longitudinal axis of the second structural member 6 and the reinforcing member 34 does not interfere.

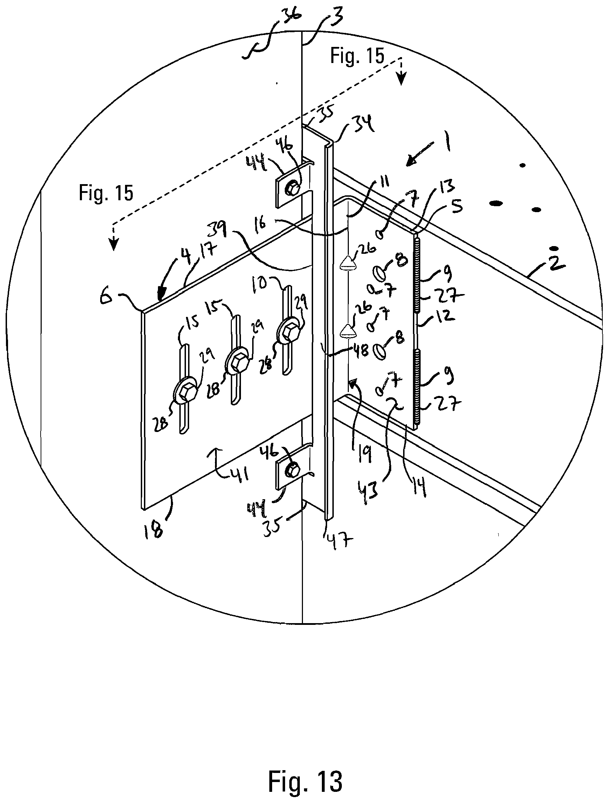

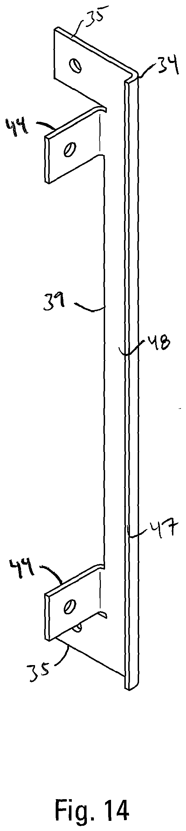

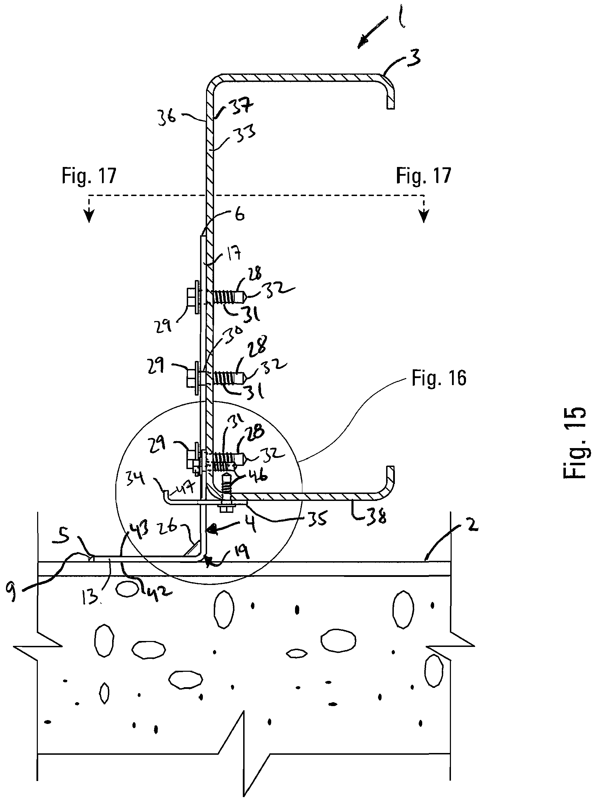

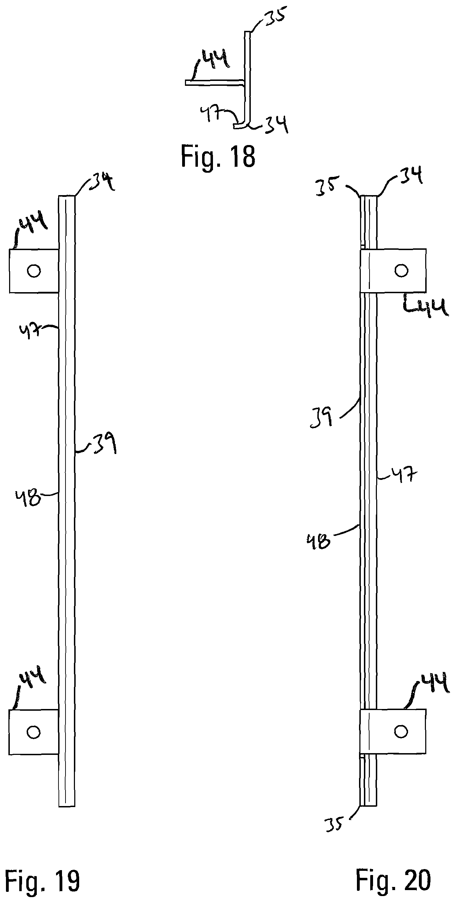

As shown in Fig. 1, the reinforcing member 34 can be formed with a pair of attachment flanges **44** that interface with the attachment face 36 of the second structural member 3 and which are joined by a central bridge **48** that has portions that overlie the angled connector 4. The reinforcing member 34 shown in Fig. 1 is connected to the second structural member 4 by fasteners **46** at the attachment flanges 44. As shown in Figs. 12 - 15 the reinforcing member 34 can be formed with one or more extending flanges 35 that interface with and attach to the side flange 38 of the second structural member 3. As best shown in Fig. 18, the central bridge 48 can be formed with a strengthening flange **47** along the upper portion of the central bridge 34

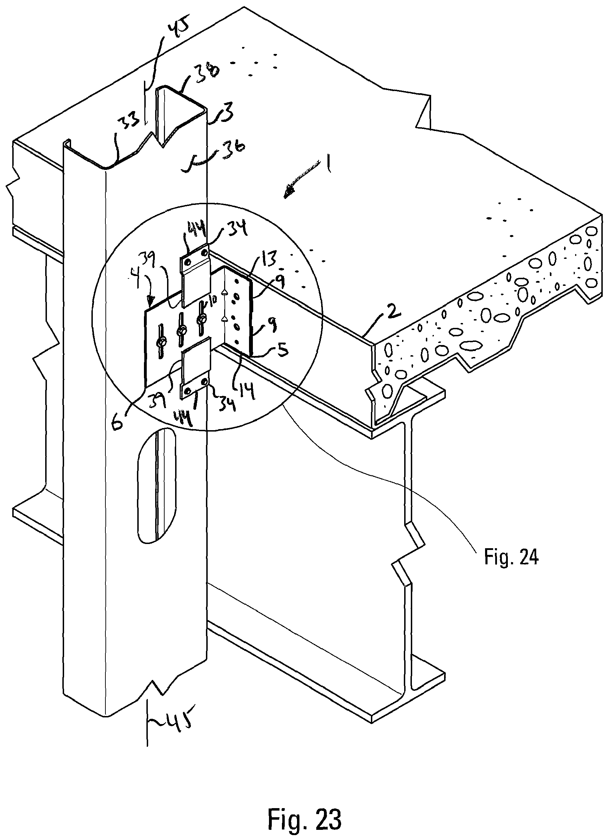

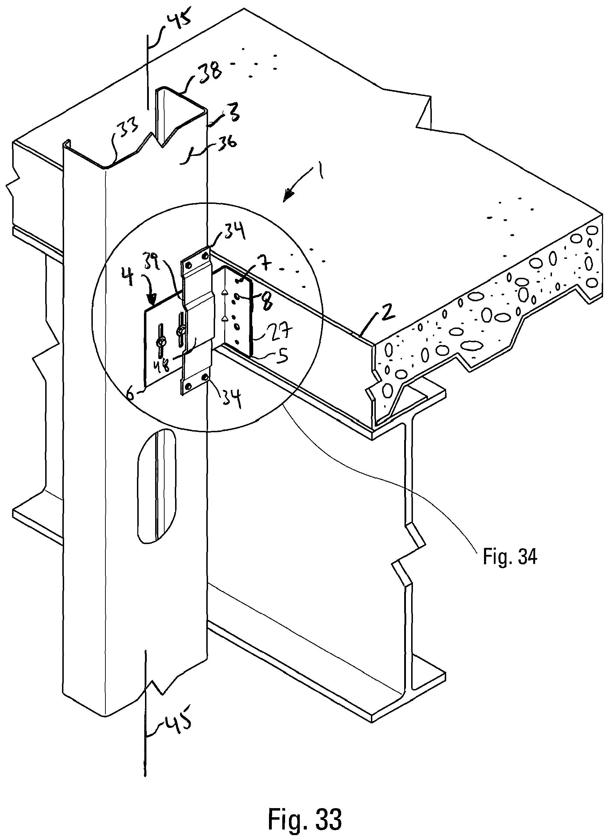

As shown in Figs. 23 and 33, the reinforcing member 34 can have a stepped central bridge 45 with a series of different elevations to clear the various portions of the angled connector 4 and fasteners 28 which it overlies.

As shown in Fig. 2 the first plate 5 has an attachment side **42** and an open side **43** facing in the opposite direction. The attachment side 42 of the first plate 5 faces the first building structural member 2.

## Claims

1. A first building structural connection comprising:
a. a first structural member;
b. a second structural member;
c. a first connector, connecting said first structural member to said second structural member, said first connector having a first plate fastened to said first structural member, and a second plate fastened to said second structural member, said second plate being joined to said first plate at an angular juncture, wherein said second plate has a plurality of fastener openings, said plurality of fastener openings are formed as a plurality of substantially parallel elongated slots in said second plate, said plurality of elongated slots being disposed substantially parallel to the angular juncture between the first and second plates, and one of the elongated slots is disposed closer to the angular juncture than the other elongated slots, and at least two of the plurality of elongated slots in said second plate is a site of a fastening to the second structural member, and at least two of the plurality of elongated slots receives at least one fastener having an elongated shank and a head, wherein the elongated shank of each fastener is received in the second structural member, and each at least one fastener can move along the elongated slot in the second plate when the second structural member moves with respect to the second plate, and wherein the elongated slot disposed closer to the angular juncture than the other elongated slots is one of the at least two of the plurality of elongated slots that is a site of a fastening to the second structural member and receives at least one fastener having an elongated shank and a head; and
d. a reinforcing member, said reinforcing member being connected to said second structural member and having portions that overlie the second plate of the angled connector.

2. The building structural connection of claim 1, wherein:
a. the second structural member has an attachment face and the second plate of the angled connector is connected to the attachment face of the second structural member;
b. the second plate has an attachment side that interfaces with the attachment face of the second structural member and an open side disposed opposite the attachment side; and
c. the reinforcing member has portions that overlie the open side of the second plate.

3. The building connection of claim 2, wherein:
the reinforcing member has portions that interface with the attachment face of the second structural member.

4. The building connection of claim 3, wherein:
the reinforcing member is directly connected to the attachment face of the second structural member at the portions of the reinforcing member that interface with the attachment face of the second structural member.

5. The building structural connection of any one of claims 2 to 4, wherein:
a. the second structural member has a side flange that is disposed at a different angle than the attachment face of the second structural member;
b. the reinforcing member has portions that interface with the side flange of the second structural member.

6. The building connection of claim 5, wherein:
the reinforcing member is directly connected to the side flange of the second structural member at the portions of the reinforcing member that interface with the side flange of the second structural member.

7. The building connection of any one of claims 1 to 6, wherein:
the reinforcing member overlies a portion of the angled connector close to the elongated slot disposed closer to the angular juncture than the other elongated slots.

8. The building connection of any one of claims 1 to 7, wherein:
a. the second structural member has a longitudinal axis and the second structural member is elongated along the longitudinal axis;
b. the second plate of the angled connector is formed with a first side edge and a second side edge, and the first side edge lies above the second side edge on the longitudinal axis of the second structural member;
and
c. the reinforcing member interfaces with the second structural member at a positions above the first side edge of the second plate, and the reinforcing member interfaces with the second structural member at position below the second side edge of the second plate along the longitudinal axis of the second structural member.

9. The building connection of claim 8, wherein:
the portions of the reinforcing member that interface with the second structural member are spaced a selected distance from the first and second side edges so as to allow the second plate to move along the longitudinal axis of the second structural member with respect to the second structural member.

10. The building connection of any one of claims 1 to 9, wherein:
a. the second structural member has a longitudinal axis and the second structural member is elongated along the longitudinal axis;
b. the second plate of the angled connector is formed with a first side edge and a second side edge, and the first side edge lies above the second side edge on the longitudinal axis of the second structural member;
and
c. the reinforcing member interfaces with the second structural member at a position above the first side edge of the second plate,

11. The building connection of any one of claims 8 to 10, wherein:
the portions of the reinforcing member that interface with the second structural member are spaced a selected distance from the first side edge so as to allow the second plate to move along the longitudinal axis of the second structural member with respect to the second structural member.

12. The building connection of any one of claims 1 to 11, wherein:
a. the second structural member has a longitudinal axis and the second structural member is elongated along the longitudinal axis;
b. the second plate of the angled connector is formed with a first side edge and a second side edge, and the first side edge lies above the second side edge on the longitudinal axis of the second structural member;
and
c. the reinforcing member interfaces with the second structural member at position below the second side edge of the second plate along the longitudinal axis of the second structural member.

13. The building connection of any one of claims 8 to 12, wherein:
the portions of the reinforcing member that interface with the second structural member are spaced a selected distance from the second side edge so as to allow the second plate to move along the longitudinal axis of the second structural member with respect to the second structural member.

14. The building structural connection of any one of claims 1 to 13 further comprising:
one or more gusset darts in the angular juncture that reinforce the angular juncture.

15. The building structural connection of any one of claims 1 to 14 wherein:
said fasteners that attach said second plate to said second structural member are screws.

16. The building structural connection of any one of claims 1 to 15 wherein:
said fasteners that attach said second plate to said second structural member are shouldered screws.

17. The building structural connection of any one of claims 1 to 16 wherein:
said first structural member is fastened to said first connector so that said first building structural member cannot move relative said first plate of said angular connector.

18. The building structural connection of any one of claims 1 to 17, wherein:
each of the plurality of elongated slots in the second plate is the site of a fastening to the second structural member.

19. The building structural connection of any one of claims 1 to 18, wherein:
a. said first structural member is horizontally disposed member, and
b. said first structural member is a vertically disposed member that is part of a wall.
